# EUROPEAN PATENT APPLICATION

(11) **EP 4 826 877 A1**
(43) Date of publication of application: **21.10.2026**
(21) Application number: 25751401.8
(22) Date of filing: 26.01.2025
(51) Int. Cl.: H01M 50/244, H01M 50/249, H01M 50/289

(54) **BATTERY AND ELECTRIC DEVICE**

(30) Priority: 06.02.2024 CN 202420286449 U
(71) Applicant: Contemporary Amperex Technology Co., Limited, Ningde, Fujian 352100 (CN)
(72) Inventor: WANG, Yalei, Ningde, Fujian 352100 (CN); WANG, Liangyi, Ningde, Fujian 352100 (CN); ZHOU, Huiping, Ningde, Fujian 352100 (CN)
(74) Representative: Lorenz Seidler Gossel Part. mbB
(86) International application number: PCT/CN2025/075254
(87) International publication number: WO 2025/167801

(57) **Abstract**

Disclosed in the present application are a battery and an electric device. The battery is configured to be connected to brackets. The battery comprises a case. The case comprises a first case and a second case, wherein in a first direction, the first case and the second case are connected to each other, and the first case and the second case jointly define a chamber for accommodating a battery cell. The first case is provided with a first connecting face and second connecting faces, which face the first direction, the first connecting face being connected to the second case, and the second connecting faces being configured to be connected to the brackets. The positions of the first connecting face and the second connecting faces in the first direction do not overlap. The technical solution provided in the present application can improve the volumetric energy density of the battery.

## Description

### CROSS-REFERENCE TO RELATED APPLICATIONS

The present application claims priority to Chinese Patent Application No. 202420286449.8, filed on February 6, 2024 and entitled "Battery and Electric Device", which is incorporated herein by reference in its entirety.

### TECHNICAL FIELD

The present application relates to the field of battery technologies, and in particular, to a battery and an electric device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

In the development of battery technologies, how to increase energy density of a battery is a technical problem to be solved in the battery technologies.

### SUMMARY

The present application provides a battery and an electric device, and the technical solution provided in the present application can increase a volumetric energy density of the battery.

The present application is implemented through the following technical solutions:
According to a first aspect, the present application provides a battery, and the battery is configured to be connected to a bracket. The battery comprises a case. The case comprises a first case and a second case. The first case and the second case are connected to each other in a first direction, and the first case and the second case jointly define a chamber for accommodating a battery cell. The first case has a first connecting face and a second connecting face, which face the first direction, the first connecting face is connected to the second case, and the second connecting face is configured to be connected to the bracket. Positions of the first connecting face and the second connecting face in the first direction do not overlap.

In the foregoing solution, the first connecting face and the second connecting face are disposed such that the positions of the first connecting face and the second connecting face in the first direction do not overlap, so that a connecting interface between the first case and the second case of the battery and a connecting interface between the battery and the bracket are misaligned in a vertical direction. In one aspect, this can effectively reduce a risk that a structure of the battery interferes with the bracket or a structure of the battery interferes with an instrument for performing an assembly action due to an excessively small distance between the two connecting interfaces, which prevents increasing difficulty of assembling the battery and the bracket and affecting assembly efficiency of the battery and the bracket. In another aspect, compared with a solution of increasing a lateral dimension of the second connecting face, misaligning the two connecting interfaces in the vertical direction can effectively reduce additional occupation of a lateral space by the second connecting face, that is, enhance utilization of the lateral space by the case, and enable more battery cells to be loaded in the case, thereby enabling the battery to have a relatively high volumetric energy density.

According to some embodiments of the present application, the second connecting face is farther away from the chamber than the first connecting face.

In the foregoing solution, the second connecting face is located on an outer side, that is, the connecting interface between the battery and the bracket is located on the outer side, which can reduce an influence of the structure of the battery interfering with the bracket or interfering with the instrument for performing the assembly action. Therefore, difficulty of assembling the battery to the bracket is reduced, which enables the battery to be efficiently assembled to the bracket.

According to some embodiments of the present application, the second connecting face extends beyond the first connecting face in a direction from the first case to the second case.

In the foregoing solution, the second connecting face is disposed to extend beyond the first connecting face. In one aspect, an influence of the structure of the battery interfering with the bracket or interfering with the instrument for performing the assembly action can be reduced. Therefore, difficulty of assembling the battery to the bracket is reduced, which enables the battery to be efficiently assembled to the bracket. In another aspect, the first connecting face can utilize a space below the bracket in a lateral direction, and an internal volume of the case can be increased, thereby loading more battery cells, and facilitating an increase in the volumetric energy density of the battery.

According to some embodiments of the present application, the first connecting face is provided with a first connecting member, and the first connecting member is connected to the second case. The first connecting member does not extend beyond the second connecting face in a direction from the first case to the second case.

In the foregoing solution, the first connecting portion is disposed, which can enable the first case and the second case to have a relatively stable connection relationship, thereby enabling the battery to have relatively high reliability. In addition, the first connecting portion is disposed to not extend beyond the second connecting face, which can reduce an influence of the first connecting portion interfering with the bracket or interfering with the instrument for performing the assembly action. Therefore, difficulty of assembling the battery to the bracket is reduced, which enables the battery to be efficiently assembled to the bracket.

According to some embodiments of the present application, the first connecting face is disposed in the circumferential direction of an opening of the first case, there are a plurality of first connecting members, and the plurality of first connecting members are disposed at intervals in the circumferential direction of the opening.

In the foregoing solution, the plurality of first connecting members are disposed in the circumferential direction of the opening of the first case, which can effectively improve connection strength and sealing between the first case and the second case, thereby enabling the battery to have a stable structure and high reliability.

According to some embodiments of the present application, the second connecting face is provided with a first mounting hole, and the first mounting hole is configured to allow a mounting member to pass through to be connected to the bracket.

In the foregoing solution, the first mounting hole is disposed in the second connecting face, which can enable the mounting member to pass through the first mounting hole to conveniently and efficiently mount the battery to the bracket, thereby enabling assembly efficiency between the battery and the bracket to be high.

According to some embodiments of the present application, the second connecting face comprises a first region and a second region, the first region protrudes from the second region, the first region is closer to the chamber than the second region, and the first region protrudes beyond the second region and is located between two adjacent first connecting members. At least a portion of the first mounting hole is located in the first region.

In the foregoing solution, the first region protruding toward an inner side of the case and located between two adjacent first connecting portions is disposed, and at least a portion of the first mounting hole is disposed in the first region, so that the mounting member does not interfere with the first connecting member and space utilization of the case is enhanced, thereby enabling the battery to have a relatively high volumetric energy density. In other words, the first connecting member is enabled to displace toward an outer side without interfering with the mounting member, thereby expanding a space inside the case to assemble more battery cells, and further facilitating an increase in the volumetric energy density of the battery.

According to some embodiments of the present application, the second case is formed with an avoidance portion that avoids the first region.

In the foregoing solution, the avoidance portion is disposed on the second case, which can reduce an influence of the mounting member on the second case, resulting in a stable structure and good sealing between the second case and the first case, thereby enabling the battery to have high reliability.

According to some embodiments of the present application, the first case further has a transition face, and the first connecting face and the second connecting face are connected via the transition face. The first connecting face, the second connecting face, and the transition face jointly define an accommodating groove, and the first case is provided with a drainage portion communicating the accommodating groove with the outside.

In the foregoing solution, the drainage portion is disposed on the first case, so that accumulated liquid in the accommodating groove can be effectively discharged to reduce a risk of corrosion of the case due to the accumulated liquid, thereby enabling the battery to have relatively high reliability.

According to some embodiments of the present application, the drainage portion comprises a drainage groove, one end of the drainage groove runs through the transition face and the other end of the drainage groove runs through an outer surface of the first case in a second direction, and the first direction and the second direction are perpendicular to each other.

In the foregoing solution, the drainage groove running through the transition face and the outer surface of the first case is disposed, which can effectively discharge the accumulated liquid in the accommodating groove to reduce the risk of corrosion of the case due to the accumulated liquid, thereby enabling the battery to have relatively high reliability.

According to some embodiments of the present application, the drainage groove extends from the first connecting face to the second connecting face in the first direction.

In the foregoing solution, the drainage groove is disposed to extend from the first connecting face to the second connecting face. In one aspect, the accumulated liquid in the accommodating groove is effectively discharged from an outer side of the case. In another aspect, a molding direction of the drainage groove may be downward from the second connecting face to the first connecting face, which can reduce molding difficulty of the drainage groove, improve manufacturing efficiency of the case, and further improve manufacturing efficiency of the battery.

According to some embodiments of the present application, the groove width of the drainage groove is w, satisfying 4 mm ≤ w ≤ 15 mm.

In the foregoing solution, the width of the drainage groove is set to be not less than 4 mm, which can enable the accumulated liquid to be quickly discharged from the accommodating groove, and reduce the risk of corrosion of the case; and the width of the drainage groove is set to be not greater than 15 mm, which can reduce an influence of disposing the drainage groove on structural strength of the first case, thereby enabling the battery to have high reliability. For this reason, the width of the drainage groove is set to be not less than 4 mm and not greater than 15 mm, which can balance both discharging efficiency of the accumulated liquid and structural strength of the first case, thereby enabling the battery to have high reliability.

According to some embodiments of the present application, the first case comprises two first walls facing each other in the second direction and two second walls facing each other in a third direction, the first wall and the second wall are adjacent to each other, and the first direction, the second direction, and the third direction are perpendicular to each other. The first connecting face comprises a first connecting sub-face and a second connecting sub-face connected to each other, the first connecting sub-face is formed on the first wall, and the second connecting sub-face is formed on the second wall.

In the foregoing solution, in one aspect, the first case is enclosed by two first walls and two second walls, so that a battery cell can effectively utilize an internal space of the case, which helps an increase in the volumetric energy density of the battery. In another aspect, the first connecting face is formed on the first wall and the second wall, so that the first case can be effectively connected to the second case to improve stability and sealing of connection between the first case and the second case, thereby enabling the battery to have high reliability.

According to some embodiments of the present application, the second connecting face is formed on the first wall.

In the foregoing solution, the second connecting face is disposed on the first wall, so that the first wall is connected to the bracket, thereby improving efficiency of assembling the battery to the bracket when the battery is stably connected to the bracket.

According to some embodiments of the present application, the length dimension of the first wall is greater than the length dimension of the second wall.

In the foregoing solution, the second connecting face is disposed on the first wall with a relatively large length dimension, so that there is a relatively large connecting area between the battery and the bracket to improve connection stability between the battery and the bracket, thereby enabling the battery to be stably mounted onto the bracket.

According to a second aspect, some embodiments of the present application further provide an electric device. The electric device comprises a device body and the battery provided in the first aspect. The device body has a bracket. The battery is connected to the device body via the bracket, and the battery is configured to provide electric energy to the device body.

In the foregoing solution, the connecting interface between the first case and the second case of the battery and the connecting interface between the battery and the bracket are misaligned in the vertical direction. In one aspect, this can reduce a risk that a structure of the battery interferes with the bracket or interferes with an instrument for performing an assembly action, which prevents increasing difficulty of assembling the battery and the bracket and affecting assembly efficiency of the battery and the bracket. In another aspect, this can enhance space utilization of the case in a lateral direction, and enable more battery cells to be loaded in the case, thereby enabling the battery to have a relatively high volumetric energy density.

According to some embodiments of the present application, the second connecting face is provided with a first mounting hole, the bracket is provided with a second mounting hole, the first mounting hole and the second mounting hole are correspondingly disposed, and the battery is mounted onto the bracket by the mounting member passing through the first mounting hole and the second mounting hole.

In the foregoing solution, the first mounting hole and the second mounting hole are disposed, so that the battery can be connected to the bracket in a mounting manner. In one aspect, efficiency of assembling the battery to the bracket can be improved. In another aspect, the electric device is enabled to use battery swapping for energy replenishment, thereby enabling the electric device to have a relatively fast energy replenishment efficiency.

According to some embodiments of the present application, the mounting member is rotatably disposed in the first mounting hole, and the mounting member is configured to be locked or unlocked to or from the bracket via rotation.

In the foregoing solution, by rotating the mounting member, the battery can be locked to the bracket or unlocked from the bracket, so that the battery can be quickly replaced to enable energy replenishing efficiency of the electric device to be high.

According to some embodiments of the present application, the second connecting face comprises a first region and a second region, the first region protrudes from the second region, and the first region is closer to the chamber than the second region. The mounting member comprises a rod body and at least two clamping portions, the clamping portions protrude from the rod body in a radial direction of the rod body, and the second mounting hole allows the clamping portions to pass through. When the mounting member is locked to the bracket, at least one mounting member and the first region cooperate to clamp the bracket.

In the foregoing solution, the first region protruding toward an inner side of the case and located between two adjacent first connecting portions is disposed, and the first region can cooperate with the mounting member to clamp the bracket, so that the mounting member can be prevented from interfering with a connecting member between the first case and the second case, space utilization of the case is enhanced, and the overall structure of the battery is enabled to be compact to have a relatively high volumetric energy density.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic diagram of a vehicle according to some embodiments of the present application;
FIG. 2 is a schematic diagram of a battery and a bracket according to some embodiments of the present application;
FIG. 3 is a schematic diagram of a battery according to some embodiments of the present application;
FIG. 4 is a schematic diagram of a partial structure of a battery according to some embodiments of the present application;
FIG. 5 is an enlarged view of part A in FIG. 3;
FIG. 6 is an enlarged view of part B in FIG. 4;
FIG. 7 is a schematic diagram of a first wall and a second wall according to some embodiments of the present application;
FIG. 8 is a schematic diagram of a first wall according to some embodiments of the present application;
FIG. 9 is an enlarged view of part C in FIG. 8;
FIG. 10 is an enlarged view of part D in FIG. 2; and
FIG. 11 is a schematic diagram of a partial structure of a bracket and a battery according to some embodiments of the present application.

Reference number: 100: battery; 10: case; 11: first case; 110: first wall; 111: second wall; 12: second case; 120: avoidance portion; 121: flanging; 122: avoidance groove; 13: first connecting face; 13a: first connecting sub-face; 13b: second connecting sub-face; 130: first connecting member; 14: second connecting face; 140: first mounting hole; 141: first region; 142: second region; 15: transition face; 16: accommodating groove; 17: drainage portion; 170: drainage groove; 30: battery cell; 20: mounting member; 21: rod body; 22: clamping portion; z: first direction; x: second direction; y: third direction; 1000: vehicle; 200: controller; 300: motor; 400: bracket; and 401: second mounting hole.

### DETAILED DESCRIPTION OF PREFERRED EMBODIMENTS

The following further describes implementations of the present application in detail with reference to the accompanying drawings and embodiments. The following detailed description of the embodiments and the accompanying drawings are used to describe the principles of the present application by way of example, but are not intended to limit the scope of the present application, that is, the present application is not limited to the described embodiments.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of A, presence of both A and B, and presence of B. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, the orientation or positional relationships indicated by technical terms such as "length", "width", "thickness", "upper", and "lower" are based on the orientation or positional relationships shown in the accompanying drawings. These terms are only used to facilitate the description of the embodiments of the present application and simplify the description, and do not indicate or imply that the referred device or element must have a specific orientation, be constructed and operated in a specific orientation. Therefore, they shall not be construed as limitations on the embodiments of the present application.

In the description of the embodiments of the present application, unless otherwise explicitly specified and defined, the technical terms "installed", "connected", "connect", "fixed", and the like are to be understood in a broad sense. For example, the connection may be a fixed connection, a detachable connection, or an integral connection; may refer to a mechanical connection or electrical connection, and may refer to a direct connection, an indirect connection via an intermediate medium, or an internal communication between two elements or interaction between two elements. A person of ordinary skill in the art may understand the specific meanings of the above terms in the embodiments of the present application according to specific situations.

A battery mentioned in the embodiments of the present application refers to a single physical module including one or a plurality of battery cells to provide a higher voltage and capacity. For example, the battery mentioned in the present application may include one or a plurality of battery cells. The battery cell includes an electrode assembly and an electrolyte. The electrode assembly includes a positive electrode plate, a negative electrode plate, and a separator. Working of the battery cell mainly relies on migration of metal ions between the positive electrode sheet and the negative electrode sheet. The positive electrode sheet includes a positive electrode current collector and a positive electrode active material layer. A surface of the positive electrode current collector is coated with the positive electrode active material layer. A portion that is of the positive electrode current collector and that is not coated with the positive electrode active material layer protrudes from a portion that is of the positive electrode current collector and that is coated with the positive electrode active material layer, and the portion that is of the positive electrode current collector and that is not coated with the positive electrode active material layer is used as a positive tab. A lithium-ion battery is used as an example, for which, the positive electrode current collector may be made of aluminum, and the positive electrode active material may be lithium cobalt oxide, lithium iron phosphate, ternary lithium, lithium manganate oxide, or the like. The negative electrode sheet includes a negative electrode current collector and a negative electrode active material layer. A surface of the negative electrode current collector is coated with the negative electrode active material layer. A portion that is of the negative electrode current collector and that is not coated with the negative electrode active material layer protrudes from a portion that is of the negative electrode current collector and that is coated with the negative electrode active material layer, and the portion that is of the negative electrode current collector and that is not coated with the negative electrode active material layer is used as a negative tab. The negative electrode current collector may be made of copper, and the negative electrode active material may be carbon, silicon, or the like. The separator may be made of PP (polypropylene, polypropylene), PE (polyethylene, polyethylene), or the like.

The battery further includes a case, which includes a first case and a second case. The first case is connected to the second case, and the second case closes an opening of the first case to jointly enclose a closed space. The battery cell is disposed in the closed space to prevent liquid or another foreign matter from affecting charging or discharging of the battery cell.

An electric device mentioned in the embodiments of the present application may be, but is not limited to, used in a vehicle, a ship, an aircraft, or the like, and the battery may provide electric energy to the electric device, so that the electric device works. In some embodiments, the electric device includes a device body, the device body has a bracket, and the battery is assembled to the device body via the bracket. In some embodiments, a connection relationship between the battery and the bracket includes, but is not limited to, welding, clamping, connection via a threaded member, or connection via a mounting member.

In recent years, electric vehicles have experienced a leap-forward development. In the field of electric vehicles, batteries, as a power source of the electric vehicles, play an irreplaceably important role. As a core component of electric vehicles, batteries are subject to a high requirement on energy density.

Currently, the battery is disposed on the bottom of the vehicle via a bracket. The case of the battery includes a first case and a second case that are connected to each other in a first direction, and the first case and the second case jointly define a chamber for accommodating a battery cell. The first case has a first connecting face and a second connecting face, which are disposed facing the first direction. The first case is connected to the second case via the first connecting face, and the case is connected to the bracket via the second connecting face to implement connection between the battery and a vehicle body. A distance between a structure of the battery and the bracket should not be excessively small, otherwise there may be a problem that the structure of the battery and the bracket interfere with each other or the structure of the battery interferes with an instrument (such as a manipulator) for assembling the battery and the bracket, which affects the connection between the battery and the bracket. Currently, by increasing a lateral dimension of the second connecting face (a lateral direction may refer to a direction perpendicular to the first direction, for example, the second direction, and the first direction may be regarded as a vertical direction), interference of the structure of the battery with the bracket is generally reduced, or interference of the structure of the battery with the instrument for assembling the battery and the bracket is reduced, so as to implement smooth assembly of the battery and the bracket. However, adopting a solution of increasing the lateral dimension of the second connecting face results in low utilization of a case space, which affects a volumetric energy density of the battery.

In view of this, to reduce the interference of the structure of the battery with the bracket, avoid affecting assembly efficiency of the battery and the bracket, and increase the volumetric energy density of the battery, some embodiments of the present application provide a battery. A first case of the battery has a first connecting face and a second connecting face, which are disposed facing the first direction, the first connecting face is connected to the second case, and the second connecting face is configured to be connected to the bracket. Positions of the first connecting face and the second connecting face in the first direction do not overlap.

The first connecting face and the second connecting face are disposed such that the positions of the first connecting face and the second connecting face in the first direction do not overlap, so that a connecting interface between the first case and the second case of the battery and a connecting interface between the battery and the bracket are misaligned in a vertical direction. In one aspect, this can effectively reduce a risk that a structure of the battery interferes with the bracket or a structure of the battery interferes with an instrument for performing an assembly action due to an excessively small distance between the two connecting interfaces, which prevents increasing difficulty of assembling the battery and the bracket and affecting assembly efficiency of the battery and the bracket. In another aspect, compared with a solution of increasing a lateral dimension of the second connecting face, misaligning the two connecting interfaces in the vertical direction can effectively reduce additional occupation of a lateral space by the second connecting face, that is, enhance utilization of the lateral space by the case, and enable more battery cells to be loaded in the case, thereby enabling the battery to have a relatively high volumetric energy density.

The battery disclosed in the embodiments of the present application may be, but not limited to, used in a vehicle, or may be used in another electric device, where the battery may be connected to a device body via a bracket.

The battery disclosed in the embodiments of the present application may be, but is not limited to, used in a vehicle, a ship, an aircraft, or the like.

An embodiment of the present application provides an electric device using a battery as a power source. The electric device may be, but is not limited to, a mobile phone, a tablet computer, a notebook computer, an electric toy, an electric tool, an electric bicycle, an electric motorcycle, an electric vehicle, a ship, a heavy truck, a coach, a spacecraft, or the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate the description, in the following embodiments, as an example for description, an electric device in an embodiment of the present application is a vehicle.

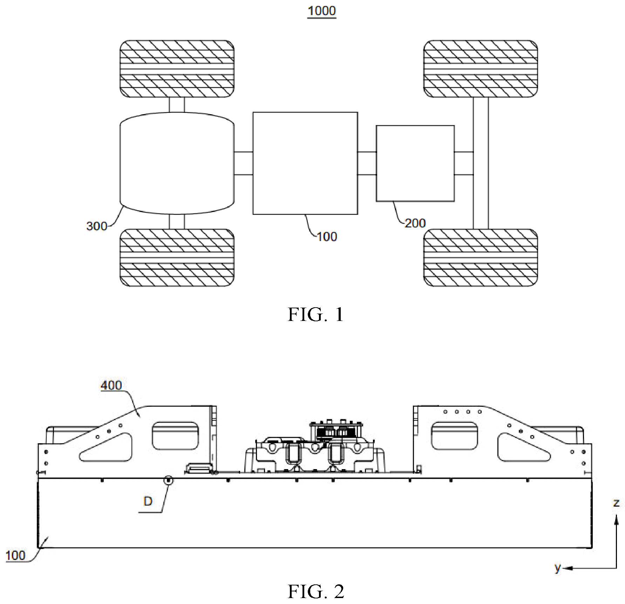

Referring to FIG. 1, FIG. 1 is a schematic diagram of a vehicle according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. The vehicle 1000 may be a car, an off-road vehicle, a heavy truck, a coach, or the like. A battery 100 is arranged inside the vehicle 1000. The battery 100 may be arranged at a bottom, head, or tail of the vehicle 1000. The battery 100 may be used for supplying power to the vehicle 1000, for example, the battery 100 may be used as an operating power source for the vehicle 1000, and used for a circuitry of the vehicle 1000, for example, used for operating power requirements for starting, navigation, and running of the vehicle 1000.

The vehicle 1000 may further include a controller 200 and a motor 300. The controller 200 is configured to control the battery 100 to power the motor 300, for example, for a working power requirement of the vehicle 1000 during starting, navigating, and traveling.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

In some embodiments of the present application, a vehicle body of the vehicle 1000 has a bracket 400, and the bracket 400 may be connected to the battery 100. In some embodiments of the present application, the vehicle body has a longitudinal beam, and the bracket 400 is connected to the longitudinal beam.

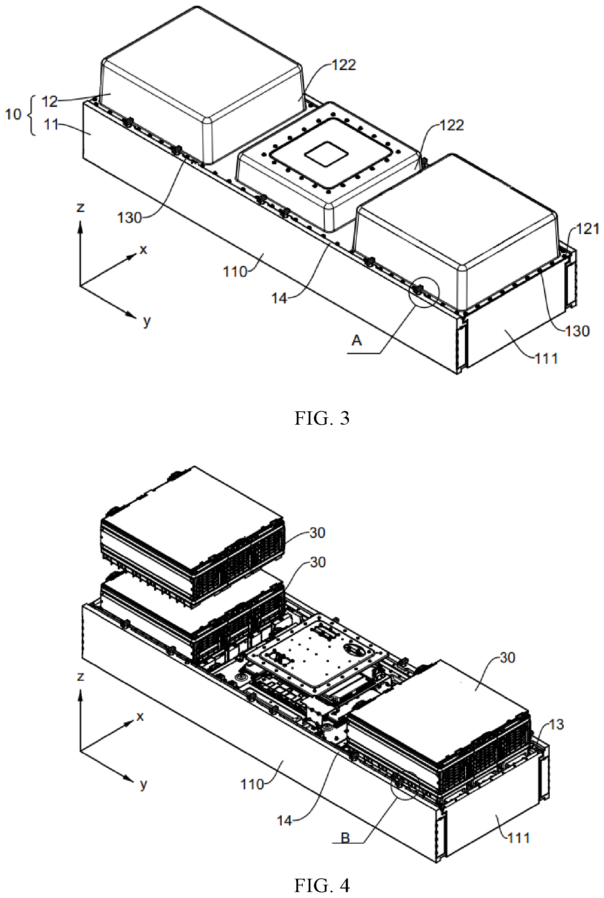

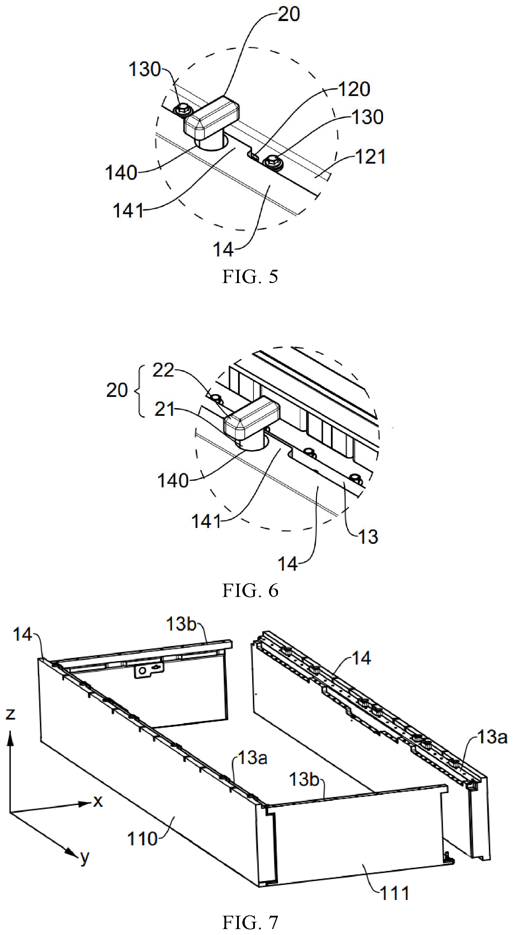

Some embodiments of the present application provide a battery 100. Referring to FIG. 2 to FIG. 6, FIG. 2 is a schematic diagram of a battery and a bracket according to some embodiments of the present application, FIG. 3 is a schematic diagram of a battery according to some embodiments of the present application, FIG. 4 is a schematic diagram of a partial structure of a battery according to some embodiments of the present application, FIG. 5 is an enlarged view of part A in FIG. 3, and FIG. 6 is an enlarged view of part B in FIG. 4.

The battery 100 is configured to be connected to the bracket 400. The battery 100 is configured to be connected to the bracket 400. The battery 100 includes a case 10. The case 10 includes a first case 11 and a second case 12. The first case 11 and the second case 12 are connected to each other in a first direction z, and the first case 11 and the second case 12 jointly define a chamber for accommodating a battery cell. The first case 11 has a first connecting face 13 and a second connecting face 14, which face the first direction z, the first connecting face 13 is connected to the second case 12, and the second connecting face 14 is configured to be connected to the bracket 400. Positions of the first connecting face 13 and the second connecting face 14 in the first direction z do not overlap.

The battery 100 may be connected to the device body of the electric device via the bracket 400. For example, the electric device is a vehicle, a frame of the vehicle is provided with the bracket 400, and the battery 100 is connected to the bracket 400 to provide electric energy for traveling of the vehicle. In some embodiments, the battery 100 is detachably connected to the bracket 400, thereby implementing battery swapping and energy replenishment of the vehicle.

An interior of the case 10 has a chamber for accommodating a battery cell. In some embodiments, the case 10 may include a first case 11 and a second case 12. The first case 11 and the second case 12 are connected to each other and jointly define a chamber for accommodating a battery cell. The chamber is a closed space. Optionally, the first case 11 and the second case 12 may each be of a hollow structure with one open side, and the open side of the first case 11 and the open side of the second case 12 cooperate with each other, such that the first case 11 and the second case 12 jointly define a closed space. Optionally, the first case 11 may be of a hollow structure with one open side, the second case 12 may be of a plate-like structure, and the second case 12 is disposed on the open side of the first case 11, such that the first case 11 and the second case 12 jointly define a closed space. Optionally, the second case 12 may be of a hollow structure with one open side, the first case 11 may be of a plate-like structure, and the first case 11 is disposed on the open side of the second case 12, such that the first case 11 and the second case 12 jointly define a closed space. Optionally, there may be one or a plurality of battery cells disposed in the closed space.

For example, referring to FIG. 4, the battery 100 is provided with a plurality of battery cells 30. The plurality of battery cells 30 may be subjected to series connection, parallel connection, or series-parallel connection. The series-parallel connection means that the plurality of battery cells 30 are subjected to both series connection and parallel connection. The plurality of battery cells 30 may be directly connected in series, in parallel, or in a combination of both, and the whole of the plurality of battery cells 30 is accommodated in the closed space. Certainly, the battery 100 may alternatively be formed in a manner that a plurality of battery cells 30 are subjected to series connection, parallel connection, or series-parallel connection to form battery modules, and the plurality of battery modules are then subjected to series connection, parallel connection, or series-parallel connection to form an integrated unit, which is accommodated in the closed space.

In some embodiments, a connection relationship between the first case 11 and the second case 12 includes, but is not limited to, welding, bonding, clamping, connection via a connecting member, or the like. For example, the first case 11 and the second case 12 are connected via a threaded member.

In some embodiments, the first case 11 may be a lower case 10, and the second case 12 may be an upper cover. The frame of the vehicle includes two longitudinal beams, the second case 12 is formed with an avoidance groove 122, and the avoidance groove 122 can avoid the longitudinal beams of the vehicle, so that the battery cells in the case 10 can utilize spaces on sides of the longitudinal beams, thereby enhancing space utilization of the battery 100.

In some embodiments, a structural strength of a material of the first case 11 may be greater than a structural strength of a material used to manufacture the second case 12. In some embodiments, a density of the material of the first case 11 may be greater than a density of the material used to manufacture the second case 12. For example, the material of the first case 11 includes, but is not limited to, aluminum alloy or stainless steel.

In some embodiments, the first direction z may be parallel to a direction of gravity. "A first connecting face 13 and a second connecting face 14, which face the first direction z" may be understood as that a plane on which the first connecting face 13 is located may be perpendicularly passed through by the first direction z, and a plane on which the second connecting face 14 is located may be perpendicularly passed through by the first direction z.

The first connecting face 13 is a surface on which the first case 11 is connected to the second case 12. For example, an edge of the second case 12 is provided with a flanging 121, the flanging 121 is lapped on the first connecting face 13, the flanging 121 is provided with a through hole, the first connecting face 13 is correspondingly provided with a threaded hole, and a bolt passes through the through hole of the flanging 121 and is screwed into the threaded hole, so that the first case 11 and the second case 12 are connected to each other.

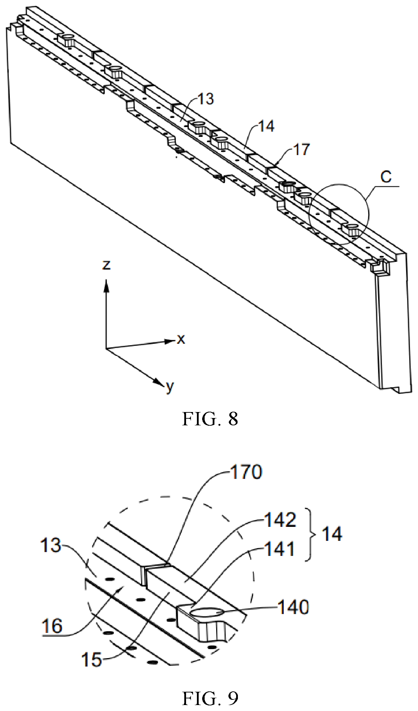

In some embodiments, the first connecting face 13 may be disposed in the circumferential direction of an opening of the first case 11. In some embodiments, referring to FIG. 7 to FIG. 9, FIG. 7 is a schematic diagram of a first wall and a second wall according to some embodiments of the present application, FIG. 8 is a schematic diagram of a first wall according to some embodiments of the present application, and FIG. 9 is an enlarged view of part C in FIG. 8.

The case 10 is square, and the first case 11 includes a bottom wall, two first walls 110 facing each other in a second direction x, and two second walls 111 facing each other in a third direction y. The first wall 110 and the second wall 111 are disposed adjacent to each other and are respectively disposed on edges of the bottom wall. The first connecting face 13 is annular, and the first connecting face 13 includes a first connecting sub-face 13a and a second connecting sub-face 13b connected to each other. The first connecting sub-face 13a is formed on the first wall 110, and the second connecting sub-face 13b is formed on the second wall 111. Four edges of the second case 12 are each provided with a flanging 121, and four flangings 121 are respectively lapped on the first walls 110 and the second walls 111 and correspond to the first connecting sub-face 13a and the second connecting sub-face 13b.

The second connecting face 14 is a surface of the case 10 connected to the bracket 400, that is, a part of the battery 100 connected to the bracket 400. In some embodiments, the second connecting face 14 is formed at an end portion of the first wall 110 facing away from the bottom wall. In some embodiments, the second connecting face 14 is formed at an end portion of the second wall 111 facing away from the bottom wall. In some other embodiments, the second connecting face 14 is formed at an end portion of the first wall 110 facing away from the bottom wall and an end portion of the second wall 111 facing away from the bottom wall.

In some embodiments, a connection relationship between the bracket 400 and the second connecting face 14 includes, but is not limited to, welding, clamping, bonding, connection via a connecting member, or the like. In some embodiments, the second connecting face 14 is formed with a threaded hole, and the bracket 400 is connected to the battery 100 in a manner that a bolt is connected to the threaded hole. In some embodiments, the second connecting face 14 is provided with a first mounting hole 140, the first mounting hole 140 can accommodate a mounting member 20, and the mounting member 20 passes through an opening of the first mounting hole 140 to be mounted onto the bracket 400, so that the battery 100 is mounted onto the bracket 400.

"Positions of the first connecting face 13 and the second connecting face 14 in the first direction z do not overlap" may be understood as that the first connecting face 13 and the second connecting face 14 are misaligned in the first direction z. For example, the first direction z is the direction of gravity, and the first connecting face 13 is located below the second connecting face 14, that is, a part at which the first case 11 and the second case 12 are connected to each other is located below a part at which the battery 100 and the bracket 400 are connected to each other. For another example, the first direction z is the direction of gravity, and the first connecting face 13 is located above the second connecting face 14, that is, the part at which the first case 11 and the second case 12 are connected to each other is located above the part at which the battery 100 and the bracket 400 are connected to each other.

In the foregoing solution, the first connecting face 13 and the second connecting face 14 are disposed such that the positions of the first connecting face 13 and the second connecting face 14 in the first direction z do not overlap, so that a connecting interface between the first case 11 and the second case 12 of the battery 100 and a connecting interface between the battery 100 and the bracket 400 are misaligned in a vertical direction. In one aspect, this can effectively reduce a risk that a structure of the battery 100 interferes with the bracket 400 or a structure of the battery 100 interferes with an instrument for performing an assembly action due to an excessively small distance between the two connecting interfaces, which prevents increasing difficulty of assembling the battery 100 and the bracket 400 and affecting assembly efficiency of the battery 100 and the bracket 400. In another aspect, compared with a solution of increasing a lateral dimension of the second connecting face 14, misaligning the two connecting interfaces in the vertical direction can effectively reduce additional occupation of a lateral space by the second connecting face 14, that is, enhance utilization of the lateral space by the case 10, and enable more battery cells to be loaded in the case 10, thereby enabling the battery 100 to have a relatively high volumetric energy density.

According to some embodiments of the present application, the second connecting face 14 is farther away from the chamber than the first connecting face 13.

In some embodiments, the second connecting face 14 is located on a further outer side of an internal space of the case 10 than the first connecting face 13. For example, an outer edge of the first connecting face 13 facing away from the case 10 encloses the opening of the first case 11, and the second connecting face 14 is located on an outer side of the opening of the first case 11.

In some embodiments, the second connecting face 14 includes a plurality of regions, and in the plurality of regions, some regions may be farther away from the chamber than the first connecting face 13. Other regions may be closer to the chamber than the first connecting face 13. For example, the second connecting face 14 includes a region protruding toward the interior of the case 10, and the first connecting face 13 is formed with a recessed portion avoiding the region.

In the foregoing solution, the second connecting face 14 is located on an outer side, that is, the connecting interface between the battery 100 and the bracket 400 is located on the outer side, which can reduce an influence of the structure of the battery 100 interfering with the bracket 400 or interfering with the instrument for performing the assembly action. Therefore, difficulty of assembling the battery 100 to the bracket 400 is reduced, which enables the battery 100 to be efficiently assembled to the bracket 400.

According to some embodiments of the present application, the second connecting face 14 extends beyond the first connecting face 13 in a direction from the first case 11 to the second case 12.

In some embodiments, the battery 100 may be mounted below the bracket 400, and that the second connecting face 14 extends beyond the first connecting face 13 may be understood as that the second connecting face 14 is located above the first connecting face 13. For example, the lowest part of the second case 12 is lapped on the first connecting face 13, and the second connecting face 14 is higher than the lowest part of the second case 12.

In the foregoing solution, the second connecting face 14 is disposed to extend beyond the first connecting face 13. In one aspect, an influence of the structure of the battery 100 interfering with the bracket 400 or interfering with the instrument for performing the assembly action can be reduced. Therefore, difficulty of assembling the battery 100 to the bracket 400 is reduced, which enables the battery 100 to be efficiently assembled to the bracket 400. In another aspect, the first connecting face 13 can utilize a space below the bracket 400 in a lateral direction, and an internal volume of the case 10 can be increased, thereby loading more battery cells, and facilitating an increase in the volumetric energy density of the battery 100.

In some other embodiments, the first connecting face 13 extends beyond the second connecting face 14 in the direction from the first case 11 to the second case 12. In some other embodiments, the battery 100 may be mounted below the bracket 400, the lowest part of the second case 12 is lapped on the first connecting face 13, and the second connecting face 14 is lower than the lowest part of the second case 12.

According to some embodiments of the present application, referring to FIG. 5, the first connecting face 13 is provided with a first connecting member 130, and the first connecting member 130 is connected to the second case 12. The first connecting member 130 does not extend beyond the second connecting face 14 in the direction from the first case 11 to the second case 12.

The first connecting member 130 is a connecting member that connects the first case 11 and the second case 12. For example, the first connecting member 130 may include a bolt, a screw, a rivet, or the like.

In some embodiments, the first connecting member 130 is a bolt. The edge of the second case 12 is provided with a flanging 121, and the flanging 121 is lapped on the first connecting face 13. The flanging 121 is provided with a through hole, the first connecting face 13 is correspondingly provided with a threaded hole, a threaded rod of the first connecting member 130 passes through the through hole of the flanging 121 and is screwed into the threaded hole, and a screw cap of the first connecting member 130 abuts against the flanging 121, so that the first case 11 and the second case 12 are connected to each other.

"The first connecting member 130 does not extend beyond the second connecting face 14 in the direction from the first case 11 to the second case 12" may be understood as that a portion of the first connecting member 130 located on the same side as the second connecting face 14 does not extend beyond the second connecting face 14. For example, when the first connecting member 130 is a bolt, a screw cap of the bolt does not extend beyond the second connecting face 14.

In the foregoing solution, the second connecting face 14 is disposed to extend beyond the first connecting face 13. In one aspect, an influence of the structure of the battery 100 interfering with the bracket 400 or interfering with the instrument for performing the assembly action can be reduced. Therefore, difficulty of assembling the battery 100 to the bracket 400 is reduced, which enables the battery 100 to be efficiently assembled to the bracket 400. In another aspect, the first connecting face 13 can utilize a space below the bracket 400 in a lateral direction, and an internal volume of the case 10 can be increased, thereby loading more battery cells, and facilitating an increase in the volumetric energy density of the battery 100.

In some embodiments, a sealing member may also be disposed between the second case 12 and the first connecting face 13, and the sealing member may be a sealing structure such as a sealing rubber ring or a sealing gasket.

According to some embodiments of the present application, referring to FIG. 4 and FIG. 5, the first connecting face 13 is disposed in the circumferential direction of an opening of the first case 11, there are a plurality of first connecting members 130, and the plurality of first connecting members 130 are disposed at intervals in the circumferential direction of the opening.

In some embodiments, the case 10 is square, and the first case 11 includes a bottom wall, two first walls 110 facing each other in a second direction x, and two second walls 111 facing each other in a third direction y. The first wall 110 and the second wall 111 are disposed adjacent to each other and are respectively disposed on edges of the bottom wall. The two first walls 110 and the two second walls 111 jointly form the opening of the first case 11. The first connecting face 13 includes a first connecting sub-face 13a and a second connecting sub-face 13b connected to each other. The first connecting sub-face 13a is formed on the first wall 110, and the second connecting sub-face 13b is formed on the second wall 111. Four edges of the second case 12 are each provided with a flanging 121, and four flangings 121 are respectively lapped on the first walls 110 and the second walls 111 and correspond to the first connecting sub-face 13a and the second connecting sub-face 13b. There are a plurality of first connecting members 130, which are disposed corresponding to the first connecting sub-face 13a of the first wall 110 and the second connecting sub-face 13b of the second wall 111.

In some other embodiments, the case 10 is cylindrical, a circumferential wall of the first case 11 forms a circular opening, an end face of the circumferential wall of the first case 11 forms the first connecting face 13, and the plurality of first connecting faces 13 are disposed at intervals on the first connecting face 13.

In the foregoing solution, the plurality of first connecting members 130 are disposed in the circumferential direction of the opening of the first case 11, which can effectively improve connection strength and sealing between the first case 11 and the second case 12, thereby enabling the battery 100 to have a stable structure and high reliability.

According to some embodiments of the present application, referring to FIG. 5 and FIG. 6, The second connecting face 14 is provided with a first mounting hole 140, and the first mounting hole 140 is configured to allow a mounting member 20 to pass through to be connected to the bracket 400.

The first mounting hole 140 is a hole-like structure formed in the second connecting face 14. The first mounting hole 140 runs through the second connecting face 14, the first mounting hole 140 can accommodate the mounting member 20, and the mounting member 20 passes through an opening formed by the first mounting hole 140 in the second connecting face 14 to be mounted onto the bracket 400.

For example, the bracket 400 is formed with a second mounting hole 401 corresponding to the first mounting hole 140. For example, the second mounting hole 401 has a non-centrally symmetrical shape, and the dimension of the second mounting hole 401 in a direction is relatively large. For example, the second mounting hole 401 is rectangular. The mounting member 20 is rotatably disposed in the first mounting hole 140, the mounting member 20 includes a rod body 21 and a clamping portion 22. The rod body 21 is rotatably disposed in the first mounting hole 140, and the clamping portion 22 protrudes from the rod body 21 in a radial direction of the rod body 21. The battery 100 is moved upward, the clamping portion 22 passes through the second mounting hole 401, and the clamping portion 22 is rotated by rotating the rod body 21, so that the clamping portion 22 is misaligned with the second mounting hole 401 to be able to be lapped on the bracket 400.

In the foregoing solution, the first mounting hole 140 is disposed in the second connecting face 14, which can enable the mounting member 20 to pass through the first mounting hole 140 to conveniently and efficiently mount the battery 100 to the bracket 400, thereby enabling assembly efficiency between the battery 100 and the bracket 400 to be high.

According to some embodiments of the present application, referring to FIG. 9, the second connecting face 14 includes a first region 141 and a second region 142, the first region 141 protrudes from the second region 142, the first region 141 is closer to the chamber than the second region 142, and the first region 141 protrudes beyond the second region 142 and is located between two adjacent first connecting members 130. At least a portion of the first mounting hole 140 is located in the first region 141.

In some embodiments, the second connecting face 14 includes a first region 141 and a second region 142, and the second region 142 is located on a further outer side of the case 10 than the first region 141. An edge of the second region 142 facing away from the first connecting face 13 is at least a portion of an outer edge of the first case 11. There may be a plurality of first regions 141, and each first region 141 protrudes from the second region 142 and protrudes toward an inner side of the case 10. Each first region 141 is located between two first connecting members 130. For example, the first connecting face 13 is provided with a threaded hole that cooperates with the first connecting member 130, and each first region 141 is located between two adjacent threaded holes.

"At least a portion of the first mounting hole 140 is located in the first region 141" may be understood as that a portion of the mounting member 20 can utilize a space between two first connecting members 130.

In some embodiments, when the mounting member 20 is mounted onto the bracket 400, at least one mounting member 20 is lapped on the bracket 400 and cooperates with the first region 141 to clamp the bracket 400.

In the foregoing solution, the first region 141 protruding toward the inner side of the case 10 and located between two adjacent first connecting portions is disposed, and at least a portion of the first mounting hole 140 is disposed in the first region 141, so that the mounting member 20 does not interfere with the first connecting member 130 and space utilization of the case 10 is enhanced, thereby enabling the battery 100 to have a relatively high volumetric energy density. In other words, the first connecting member 130 is enabled to displace toward an outer side without interfering with the mounting member 20, thereby expanding a space inside the case 10 to assemble more battery cells, and further facilitating an increase in the volumetric energy density of the battery 100.

According to some embodiments of the present application, referring to FIG. 5 and FIG. 9, the second case 12 is formed with an avoidance portion 120 that avoids the first region 141.

In some embodiments, the second case 12 is lapped on the first connecting face 13, the second case 12 is recessed toward the inner side of the case 10 to form an avoidance portion 120, and the avoidance portion 120 can avoid the first region 141 and a portion of the mounting member 20 located in the first region 141. For example, the second case 12 is provided with a flanging 121, the flanging 121 is lapped on the first connecting face 13, the flanging 121 is recessed toward the inner side of the case 10 to form an avoidance groove, and the avoidance groove can expose the first region 141 so as not to interfere with the mounting member 20.

In the foregoing solution, the avoidance portion 120 is disposed on the second case 12, which can reduce an influence of the mounting member 20 on the second case 12, resulting in a stable structure and good sealing between the second case 12 and the first case 11, thereby enabling reliability of the battery 100 to be high.

According to some embodiments of the present application, referring to FIG. 9, the first case 11 further has a transition face 15, and the first connecting face 13 and the second connecting face 14 are connected via the transition face 15. The first connecting face 13, the second connecting face 14, and the transition face 15 jointly define an accommodating groove 16, and the first case 11 is provided with a drainage portion 17 communicating the accommodating groove 16 with the outside.

The plane on which the first connecting face 13 is located and the plane on which the second connecting face 14 is located are parallel to each other, but there is a height difference between the two planes, and the transition face 15 is located between the first connecting face 13 and the second connecting face 14 and connected to the first connecting face 13 and the second connecting face 14. In some embodiments, a plane on which the transition face 15 is located is perpendicular to the plane on which the first connecting face 13 is located and the plane on which the second connecting face 14 is located. In some other embodiments, the plane on which the transition face 15 is located is inclined relative to the plane on which the first connecting face 13 is located and the plane on which the second connecting face 14 is located.

In some embodiments, the first connecting face 13, the transition face 15, and the second connecting face 14 form a trapezoidal face, and jointly define an accommodating groove 16. In some embodiments, the accommodating groove 16 can accommodate the first connecting member 130.

The drainage portion 17 is a structure formed in the first case 11, and functions to communicate the accommodating groove 16 with the outside to discharge accumulated liquid in the accommodating groove 16. For example, the drainage portion 17 is of a groove, hole or tubular structure, which can guide the accumulated liquid in the accommodating groove 16 to the outside of the case 10.

In some embodiments, the drainage portion 17 may be a drainage groove 170, and the drainage groove 170 may run through the first wall 110 in a thickness direction of the first wall 110, that is, run through the transition face 15 and an outer side face of the first wall 110. In some embodiments, the drainage portion 17 may be a drainage groove 170, and the drainage groove 170 may run through the first wall 110 in the first direction z, that is, run through the first connecting face 13 and the bottom of the first wall 110.

In the foregoing solution, the drainage portion 17 is disposed on the first case 11, so that the accumulated liquid in the accommodating groove 16 can be effectively discharged to reduce a risk of corrosion of the case 10 due to the accumulated liquid, thereby enabling the battery 100 to have relatively high reliability.

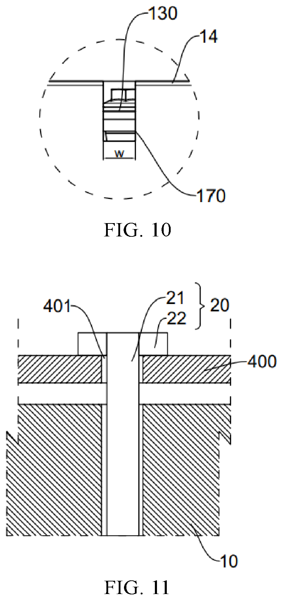

According to some embodiments of the present application, referring to FIG. 9 and FIG. 10, FIG. 10 is an enlarged view of part D in FIG. 2. The drainage portion 17 includes a drainage groove 170, one end of the drainage groove 170 runs through the transition face 15 and the other end of the drainage groove 170 runs through an outer surface of the first case 11 in the second direction x, and the first direction z and the second direction x are perpendicular to each other.

In some embodiments, the drainage portion 17 is a drainage groove 170, which is a groove structure formed in a wall portion of the first case 11, and when the first direction z is parallel to the direction of gravity, the drainage groove 170 can extend in a horizontal direction to run through the transition portion and the outer surface of the first case 11. For example, the drainage groove 170 is formed on the first wall 110, and a thickness direction of the first wall 110 is the second direction x. One end of the drainage groove 170 in the second direction x runs through the transition face 15, and the other end of the drainage groove 170 in the second direction x runs through the outer side face of the first wall 110.

In the foregoing solution, the drainage groove 170 running through the transition face 15 and the outer surface of the first case 11 is disposed, which can effectively discharge the accumulated liquid in the accommodating groove 16 to reduce the risk of corrosion of the case 10 due to the accumulated liquid, thereby enabling the battery 100 to have relatively high reliability.

In some embodiments, there are a plurality of drainage grooves 170, and the plurality of drainage grooves 170 are spaced apart in the third direction y. The first direction z, the second direction x, and the third direction y are perpendicular to each other.

According to some embodiments of the present application, referring to FIG. 8 and FIG. 9, the drainage groove 170 extends from the first connecting face 13 to the second connecting face 14 in the first direction z.

In some embodiments, the drainage groove 170 may extend from the second connecting face 14 toward the first connecting face 13, and run through the transition face 15 and the outer surface of the first case 11.

In the foregoing solution, the drainage groove 170 is disposed to extend from the first connecting face 13 to the second connecting face 14. In one aspect, the accumulated liquid in the accommodating groove 16 is effectively discharged from an outer side of the case 10. In another aspect, a molding direction of the drainage groove 170 may be downward from the second connecting face 14 to the first connecting face 13, which can reduce molding difficulty of the drainage groove 170, improve manufacturing efficiency of the case 10, and further improve manufacturing efficiency of the battery 100.

In some other embodiments, the first drainage groove 170 is of a through-hole structure, one end of which runs through the transition face 15, and the other end of which runs through the outer surface of the first case 11.

According to some embodiments of the present application, referring to FIG. 10, the groove width of the drainage groove 170 is w, satisfying 4 mm ≤ w ≤ 15 mm.

A groove width direction of the drainage groove 170 may be perpendicular to an extending direction of the drainage groove 170. In some embodiments, the drainage groove 170 extends in the second direction x, one end of the drainage groove 170 runs through the transition face 15, and the other end of the drainage groove 170 runs through the outer side face of the first wall 110. A width direction of the drainage groove 170 may be the third direction y, and the third direction y is perpendicular to the second direction x.

In some embodiments, a value of the groove width w of the drainage groove 170 may be 4 mm, 5 mm, 6 mm, 7 mm, ..., 13 mm, 14 mm, 15 mm, or any value between two adjacent values.

In some embodiments, the value of the groove width w of the drainage groove 170 may not be fixed in the extending direction of the drainage groove 170, that is, the width of a certain segment of the drainage groove 170 may not be the same as the width of other segments. For example, the width of one segment of the drainage groove 170 may be 4 mm, the width of another segment may be 5 mm, and the width of yet another segment may be 10 mm.

In the foregoing solution, the width of the drainage groove 170 is set to be not less than 4 mm, which can enable the accumulated liquid to be quickly discharged from the accommodating groove 16, and reduce the risk of corrosion of the case 10; and the width of the drainage groove 170 is set to be not greater than 15 mm, which can reduce an influence of disposing the drainage groove 170 on structural strength of the first case 11, thereby enabling reliability of the battery 100 to be high. For this reason, the width of the drainage groove 170 is set to be not less than 4 mm and not greater than 15 mm, which can balance both discharging efficiency of the accumulated liquid and structural strength of the first case 11, thereby enabling the battery 100 to have high reliability.

In some embodiments, a notch w of the drainage groove 170 may satisfy 10 mm ≤ w ≤ 12 mm.

According to some embodiments of the present application, referring to FIG. 7, the first case 11 includes two first walls 110 facing each other in the second direction x and two second walls 111 facing each other in the third direction y, the first wall 110 and the second wall 111 are adjacent to each other, and the first direction z, the second direction x, and the third direction y are perpendicular to each other. The first connecting face 13 includes a first connecting sub-face 13a and a second connecting sub-face 13b connected to each other. The first connecting sub-face 13a is formed on the first wall 110, and the second connecting sub-face 13b is formed on the second wall 111.

The case 10 may be square. The first case 11 includes two first walls 110 facing each other in the second direction x and two second walls 111 facing each other in the third direction y. The first wall 110 and the second wall 111 are disposed adjacent to each other and are respectively disposed on edges of the bottom wall. The second direction x may be a thickness direction of the first wall 110, and the second direction x may be a thickness direction of the second wall 111.

The first connecting face 13 is annular, and the first connecting face 13 includes a first connecting sub-face 13a and a second connecting sub-face 13b connected to each other. The first connecting sub-face 13a is formed on the first wall 110, and the second connecting sub-face 13b is formed on the second wall 111.

For example, four edges of the second case 12 are each provided with a flanging 121, and four flangings 121 are respectively lapped on the first walls 110 and the second walls 111 and correspond to the first connecting sub-face 13a and the second connecting sub-face 13b.

In the foregoing solution, in one aspect, the first case 11 is enclosed by two first walls 110 and two second walls 111, so that a battery cell can effectively utilize an internal space of the case 10, which helps an increase in the volumetric energy density of the battery 100. In another aspect, the first connecting face 13 is formed on the first wall 110 and the second wall 111, so that the first case 11 can be effectively connected to the second case 12 to improve stability and sealing of connection between the first case 11 and the second case 12, thereby enabling reliability of the battery 100 to be high.

According to some embodiments of the present application, referring to FIG. 7, the second connecting surface 14 is formed on the first wall 110.

"The second connecting surface 14 is formed on the first wall 110" may be understood as that a part at which the case 10 and the bracket 400 are connected to each other is formed on the first wall 110. For example, the first wall 110 is formed with a first mounting hole 140, and the first wall 110 passes through the first mounting hole 140 via the mounting member 20 to be mounted onto the bracket 400, so that the battery 100 is mounted onto the bracket 400.

"The second connecting surface 14 is formed on the first wall 110" may be understood as that the second connecting face 14 is formed only on the first wall 110, and the second connecting face 14 is not formed on the second wall 111.

In the foregoing solution, the second connecting face 14 is disposed on the first wall 110, so that the first wall 110 is connected to the bracket 400, thereby improving efficiency of assembling the battery 100 to the bracket 400 when the battery 100 is stably connected to the bracket 400.

According to some embodiments of the present application, the length dimension of the first wall 110 is greater than the length dimension of the second wall 111.

In some embodiments, the battery 100 is elongated, and the dimension of the battery 100 in the second direction x is relatively large. The second connecting face 14 is formed on a wall portion of the first case 11 having a relatively large length dimension.

The length dimension of the first wall 110 may be regarded as the dimension of the first wall 110 in the second direction x. The bracket 400 may be disposed on two longitudinal beams of the frame, and the two longitudinal beams are disposed side by side in the second direction x. A plurality of mounting members 20 are spaced apart in the second direction x on the second connecting face 14 of the first wall 110 and are mounted onto the bracket 400.

In the foregoing solution, the second connecting face 14 is disposed on the first wall 110 with a relatively large length dimension, so that there is a relatively large connecting area between the battery 100 and the bracket 400 to improve connection stability between the battery 100 and the bracket 400, thereby enabling the battery 100 to be stably mounted onto the bracket 400.

According to some embodiments of the present application, an electric device is further provided. The electric device includes a device body and the battery 100 provided above. The device body has a bracket 400. The battery 100 is connected to the device body via the bracket 400, and the battery 100 is configured to provide electric energy to the device body.

The electric device may be a vehicle, and the vehicle is used as an example for description.

The vehicle may be a fuel vehicle, a gas vehicle, or a new energy vehicle, and the new energy vehicle may be a battery electric vehicle, a hybrid vehicle, or a range-extended electric vehicle. The vehicle may be a car, an off-road vehicle, a heavy truck, a coach, or the like. The vehicle is provided with a battery 100, which may be disposed at the bottom of the vehicle. The battery 100 may be configured to supply power to the vehicle, for example, the battery 100 may be used as an operating power source for the vehicle, used for a circuit system of the vehicle, for example, used for a working power requirement for starting, navigation, and running of the vehicle.

The vehicle may further include a controller and a motor, where the controller is configured to control the battery 100 to power the motor, for example, for a working power requirement of the vehicle during starting, navigating, and traveling. In some embodiments of the present application, the battery 100 may be used not only as an operating power source for the vehicle, but also as a driving power source for the vehicle, instead of or partially instead of fuel or natural gas to provide driving power for the vehicle.

The device body may include a frame of the vehicle, and the frame may include a longitudinal beam, and the longitudinal beam is equipped with a bracket 400. The bracket 400 is used to assemble the battery 100. In some embodiments, the battery 100 and the bracket 400 may be fixedly connected or detachably connected. When the battery 100 is detachably connected to the bracket 400, an energy replenishing manner of the vehicle may include battery swapping, that is, replacing the battery 100.

In some embodiments, the battery 100 may be assembled to the bracket 400 from below the bracket 400.

In the foregoing solution, the connecting interface between the first case 11 and the second case 12 of the battery 100 and the connecting interface between the battery 100 and the bracket 400 are misaligned in the vertical direction. In one aspect, this can reduce a risk that a structure of the battery 100 interferes with the bracket 400 or interferes with an instrument for performing an assembly action, which prevents increasing difficulty of assembling the battery 100 and the bracket 400 and affecting assembly efficiency of the battery 100 and the bracket 400. In another aspect, this can enhance space utilization of the case 10 in a lateral direction, and enable more battery cells to be loaded in the case 10, thereby enabling the battery 100 to have a relatively high volumetric energy density.

According to some embodiments of the present application, referring to FIG. 5 and FIG. 11, FIG. 11 is a schematic diagram of a partial structure of a bracket and a battery according to some embodiments of the present application. The second connecting face 14 is provided with a first mounting hole 140, the bracket 400 is provided with a second mounting hole 401, the first mounting hole 140 and the second mounting hole 401 are correspondingly disposed, and the battery 100 is mounted onto the bracket 400 by the mounting member 20 passing through the first mounting hole 140 and the second mounting hole 401.

The first mounting hole 140 is a hole-like structure formed in the second connecting face 14. The first mounting hole 140 runs through the second connecting face 14, the first mounting hole 140 can accommodate the mounting member 20, and the mounting member 20 passes through an opening formed by the first mounting hole 140 in the second connecting face 14 to be mounted onto the bracket 400.

The bracket 400 is formed with a second mounting hole 401 corresponding to the first mounting hole 140. For example, the second mounting hole 401 has a non-centrally symmetrical shape, and the dimension of the second mounting hole 401 in a direction is relatively large. For example, the second mounting hole 401 is rectangular. The mounting member 20 is rotatably disposed in the first mounting hole 140, the mounting member 20 includes a rod body 21 and a clamping portion 22. The rod body 21 is rotatably disposed in the first mounting hole 140, and the clamping portion 22 protrudes from the rod body 21 in a radial direction of the rod body 21. The battery 100 is moved upward, the clamping portion 22 passes through the second mounting hole 401, and the clamping portion 22 is rotated by rotating the rod body 21, so that the clamping portion 22 is misaligned with the second mounting hole 401 to be able to be lapped on the bracket 400. For another example, the second mounting hole 401 may be a threaded hole, the mounting member 20 may be a bolt, and the bolt of the bolt passes through the first mounting hole 140 to be screwed into the second mounting hole 401.

In the foregoing solution, the first mounting hole 140 and the second mounting hole 401 are disposed, so that the battery 100 can be connected to the bracket 400 in a mounting manner. In one aspect, efficiency of assembling the battery 100 to the bracket 400 can be improved. In another aspect, the electric device is enabled to use battery swapping for energy replenishment, thereby enabling the electric device to have a relatively fast energy replenishment efficiency.

According to some embodiments of the present application, the mounting member 20 is rotatably disposed in the first mounting hole 140, and the mounting member 20 is configured to be locked or unlocked to or from the bracket 400 through rotation.

In some embodiments, the mounting member 20 can be rotated by a manipulator or other instruments to change a posture of the mounting member 20, so that the mounting member 20 can be locked to the bracket 400 or unlocked from the bracket 400, thereby implementing assembly or detachment of the battery 100 and the bracket 400.

In some embodiments, the second mounting hole 401 has a non-centrally symmetrical shape, and the dimension of the second mounting hole 401 in a direction is relatively large, and the mounting member 20 may be a member that is rotated to coincide with or be misaligned with the second mounting hole 401. When coinciding with the second mounting hole 401, the mounting member 20 can be unlocked from the bracket 400. When being misaligned with the second mounting hole 401, the mounting member 20 can be locked to the bracket 400.

In some embodiments, the mounting member 20 may be a threaded structure that can be screwed into the second mounting hole 401 of the bracket 400.

In the foregoing solution, by rotating the mounting member 20, the battery 100 can be locked to the bracket 400 or unlocked from the bracket 400, so that the battery 100 can be quickly replaced to enable energy replenishing efficiency of the electric device to be high.

According to some embodiments of the present application, referring to FIG. 5 and FIG. 9, The second connecting face 14 includes a first region 141 and a second region 142, the first region 141 protrudes from the second region 142, and the first region 141 is closer to the chamber than the second region 142. The mounting member 20 includes a rod body 21 and at least two clamping portions 22, the clamping portions 22 protrude from the rod body 21 in a radial direction of the rod body 21, and the second mounting hole 401 allows the clamping portions 22 to pass through. When the mounting member 20 is locked to the bracket 400, at least one mounting member 20 and the first region 141 cooperate to clamp the bracket 400.

In some embodiments, the second connecting face 14 includes a first region 141 and a second region 142, and the second region 142 is located on a further outer side of the case 10 than the first region 141. An edge of the second region 142 facing away from the first connecting face 13 is at least a portion of an outer edge of the first case 11. There may be a plurality of first regions 141, and each first region 141 protrudes from the second region 142 and protrudes toward an inner side of the case 10. The first connecting face 13 is provided with a first connecting member 130, and the first connecting member 130 is connected to the first case 11 and the second case 12. Each first region 141 is located between two adjacent first connecting members 130.

The rod body 21 is rotatably disposed in the first mounting hole 140, and the clamping portion 22 protrudes from the rod body 21 in the radial direction of the rod body 21. The battery 100 is moved upward, and the clamping portion 22 coincides with the second mounting hole 401 and can pass through the second mounting hole 401. The clamping portion 22 is rotated by rotating the rod body 21, so that at least one clamping portion 22 is misaligned with the second mounting hole 401 to be able to be lapped on the bracket 400, and thus the at least one clamping portion and the first region 141 can cooperate to clamp the bracket 400.

In the foregoing solution, the first region 141 protruding toward an inner side of the case 10 and located between two adjacent first connecting portions is disposed, and the first region 141 can cooperate with the mounting member 20 to clamp the bracket 400, so that the mounting member 20 can be prevented from interfering with a connecting member between the first case 11 and the second case 12, space utilization of the case 10 is enhanced, and an overall structure of the battery 100 is enabled to be compact to have a relatively high volumetric energy density.

According to some embodiments of the present application, a battery 100 is further provided. Referring to FIG. 2 to FIG. 10.

The battery 100 may be applied to a vehicle, and the battery 100 may be disposed below a frame via a bracket 400. The battery 100 includes a case 10, and the case 10 includes a first case 11 and a second case 12. The first case 11 and the second case 12 are connected to each other in a first direction z, and jointly define a chamber for accommodating a battery cell.

The case 10 is square, the first case 11 is a lower case 10, and the second case 12 is an upper cover. The first case 11 includes a bottom wall, two first walls 110 facing each other in the second direction x, and two second walls 111 facing each other in the third direction y. The first wall 110 and the second wall 111 are disposed adjacent to each other and are respectively disposed on edges of the bottom wall.

A first connecting face 13 and a second connecting face 14 are formed on a side of the first case 11 facing the second case 12. The first connecting face 13 is annular, and the first connecting face 13 includes a first connecting sub-face 13a and a second connecting sub-face 13b connected to each other. The first connecting sub-face 13a is formed on the first wall 110, and the second connecting sub-face 13b is formed on the second wall 111. Four edges of the second case 12 are each provided with a flanging 121, and four flangings 121 are respectively lapped on the first walls 110 and the second walls 111 and correspond to the first connecting sub-face 13a and the second connecting sub-face 13b. The four flangings 121 are connected to the first connecting face 13 via a first connecting member 130. The second connecting face 14 is formed on the first wall 110 and located on an outer side of the first connecting face 13, and the second connecting face 14 extends beyond the first connecting face 13 in the first direction z. The second connecting face 14 is formed with a first mounting hole 140, and the first mounting hole 140 can allow the mounting member 20 to pass through to mount the battery 100 to the vehicle.

The first connecting face 13 is connected to the second connecting face 14 via a transition face 15. The first connecting face 13, the second connecting face 14, and the transition face 15 jointly define an accommodating groove 16. The first connecting member 130 is accommodated in the accommodating groove 16, and the first connecting member 130 does not extend beyond the second connecting face 14. The first wall 110 is formed with a drainage groove 170, and the drainage groove 170 runs through the transition face 15 and an outer side face of the first wall 110 to communicate the outside with the accommodating groove 16. As the vehicle starts, accumulated liquid in the accommodating groove 16 can be discharged from the drainage groove 170 under the vibration of the vehicle.

In the foregoing solution, the first connecting face 13 and the second connecting face 14 are disposed such that the positions of the first connecting face 13 and the second connecting face 14 in the first direction z do not overlap, so that a connecting interface between the first case 11 and the second case 12 of the battery 100 and a connecting interface between the battery 100 and the bracket 400 are misaligned in a vertical direction. In one aspect, this can effectively reduce a risk that a structure of the battery 100 interferes with the bracket 400 or a structure of the battery 100 interferes with an instrument for performing an assembly action due to an excessively small distance between the two connecting interfaces, which prevents increasing difficulty of assembling the battery 100 and the bracket 400 and affecting assembly efficiency of the battery 100 and the bracket 400. In another aspect, compared with a solution of increasing a lateral dimension of the second connecting face 14, misaligning the two connecting interfaces in the vertical direction can effectively reduce additional occupation of a lateral space by the second connecting face 14, that is, enhance utilization of the lateral space by the case 10, and enable more battery cells to be loaded in the case 10, thereby enabling the battery 100 to have a relatively high volumetric energy density. In addition, the drainage groove 170 is disposed on the first wall 110, so that the accumulated liquid in the accommodating groove 16 can be effectively discharged to reduce a risk of corrosion of the case 10 due to the accumulated liquid, thereby enabling the battery 100 to have relatively high reliability.

The foregoing descriptions are merely preferred embodiments of the present application, and are not intended to limit the present application. For a person skilled in the art, various modifications and changes may be made in the present application. Any modification, equivalent replacement, or improvement made without departing from the spirit and principle of the present application shall fall within the protection scope of the present application.

## Claims

1. A battery, configured to be connected to a bracket and comprising:
a case, wherein the case comprises a first case and a second case, the first case and the second case are connected to each other in a first direction, and the first case and the second case jointly define a chamber for accommodating a battery cell; and
the first case has a first connecting face and a second connecting face, which face the first direction, the first connecting face is connected to the second case, and the second connecting face is configured to be connected to the bracket, wherein
positions of the first connecting face and the second connecting face in the first direction do not overlap.

2. The battery according to claim 1, wherein
the second connecting face is farther away from the chamber than the first connecting face.

3. The battery according to claim 2, wherein
the second connecting face extends beyond the first connecting face in a direction from the first case to the second case.

4. The battery according to claim 3, wherein
the first connecting face is provided with a first connecting member, and the first connecting member is connected to the second case; and
the first connecting member does not extend beyond the second connecting face in a direction from the first case to the second case.

5. The battery according to claim 4, wherein
the first connecting face is disposed in the circumferential direction of an opening of the first case, there are a plurality of first connecting members, and the plurality of first connecting members are disposed at intervals in the circumferential direction of the opening.

6. The battery according to claim 5, wherein
the second connecting face is provided with a first mounting hole, and the first mounting hole is configured to allow a mounting member to pass through to be connected to the bracket.

7. The battery according to claim 6, wherein
the second connecting face comprises a first region and a second region, the first region protrudes from the second region, the first region is closer to the chamber than the second region, and the first region protrudes beyond the second region and is located between two adjacent first connecting members; and
at least a portion of the first mounting hole is located in the first region.

8. The battery according to claim 7, wherein
the second case is formed with an avoidance portion that avoids the first region.

9. The battery according to any one of claims 3 to 8, wherein
the first case further has a transition face, and the first connecting face and the second connecting face are connected via the transition face; and
the first connecting face, the second connecting face, and the transition face jointly define an accommodating groove, and the first case is provided with a drainage portion communicating the accommodating groove with the outside.

10. The battery according to claim 9, wherein
the drainage portion comprises a drainage groove, one end of the drainage groove runs through the transition face and the other end of the drainage groove runs through an outer surface of the first case in a second direction, and the first direction and the second direction are perpendicular to each other.

11. The battery according to claim 10, wherein
the drainage groove extends from the first connecting face to the second connecting face in the first direction.

12. The battery according to claim 10 or 11, wherein
the groove width of the drainage groove is w, satisfying 4 mm ≤ w ≤ 15 mm.

13. The battery according to any one of claims 1 to 12, wherein
the first case comprises two first walls facing each other in the second direction and two second walls facing each other in a third direction, the first wall and the second wall are adjacent to each other, and the first direction, the second direction, and the third direction are perpendicular to each other; and
the first connecting face comprises a first connecting sub-face and a second connecting sub-face connected to each other, the first connecting sub-face is formed on the first wall, and the second connecting sub-face is formed on the second wall.

14. The battery according to claim 13, wherein
the second connecting face is formed on the first wall.

15. The battery according to claim 14, wherein
the length dimension of the first wall is greater than the length dimension of the second wall.

16. An electric device, comprising:
a device body having a bracket; and
the battery according to any one of claims 1 to 15, wherein the battery is connected to the device body via the bracket, and the battery is configured to provide electric energy to the device body.

17. The electric device according to claim 16, wherein
the second connecting face is provided with a first mounting hole, the bracket is provided with a second mounting hole, the first mounting hole and the second mounting hole are correspondingly disposed, and the battery is mounted onto the bracket by the mounting member passing through the first mounting hole and the second mounting hole.

18. The electric device according to claim 17, wherein
the mounting member is rotatably disposed in the first mounting hole, and the mounting member is configured to be locked or unlocked to or from the bracket via rotation.

19. The electric device according to claim 18, wherein
the second connecting face comprises a first region and a second region, the first region protrudes from the second region, and the first region is closer to the chamber than the second region;
the mounting member comprises a rod body and at least two clamping portions, the clamping portions protrude from the rod body in a radial direction of the rod body, and the second mounting hole allows the clamping portions to pass through, wherein when the mounting member is locked to the bracket, at least one mounting member and the first region cooperate to clamp the bracket.
